# EUROPEAN PATENT APPLICATION

(11) **EP 1 906 169 A1**
(43) Date of publication of application: **02.04.2008**
(21) Application number: 06021212.3
(22) Date of filing: 10.10.2006
(51) Int. Cl.: G01N 21/17

(54) **Gas detection method and gas detection device**

(30) Priority: 27.09.2006 EP 06020244
(71) Applicant: IR Microsystems S.A., 1015 Lausanne (CH)
(72) Inventor: Willing, Bert, 1807 Blony (CH); Kohli, Markus, 1422 Grandson (CH); Seifert, Andreas, 1153 Denens (CH)
(74) Representative: Klocke, Peter

(57) **Abstract**

A gas detection method by using a photo acoustic near-infrared gas sensor with a laser source and such a gas sensor comprising at least one amplitude modulated laser source, a gas chamber for receiving the gas to be detected, a microphone attached to the gas chamber, a photo detector for receiving the laser light after having passed through the gas filled gas chamber, processing means comprising a modulation frequency generator for providing a modulation signal for the at least one laser source and a control means for determining the gas concentration. The laser source changes it output wavelength across each cycle of the amplitude modulation between a minimum wavelength and a maximum wavelength. The result of this measurement scheme is that during each modulation cycle, the laser source scans its complete available wavelength range so that the absorption features of the target gas are levelled out to a mean value. This mean value is relatively insensitive to small variations of the laser's center wavelength; which are introduced by temperature variations.

## Description

The invention refers to a gas detection method by using a photo acoustic near-infrared gas sensor with a laser source and such a gas sensor comprising at least one amplitude modulated laser source, a gas chamber for receiving the gas to be detected, a microphone attached to the gas chamber, a photo detector for receiving the laser light after having passed through the gas filled gas chamber, processing means comprising a modulation frequency generator for providing a modulation signal for the at least one laser source and a control means for determining the gas concentration.

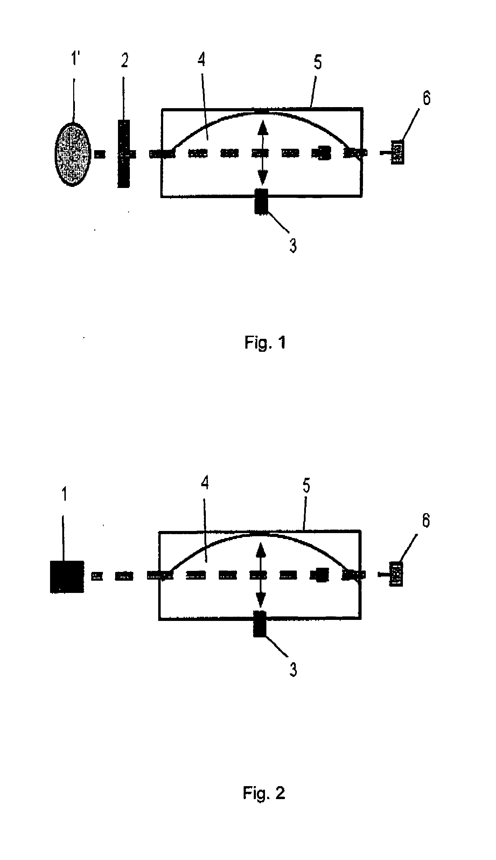

Photo acoustic gas detection is a well known principle (Fig.1): Light of a wavelength corresponding to an absorption line of the target gas is selected by an infrared filter 2 placed in front of a wide-band emitter 1' (usually a light bulb). The light of the selected wavelength is propagating through a volume of gas 4 (typically in a tube 5) which might contain the target gas. If the latter is present, it will absorb a part of the light as a function of target gas concentration.

The light absorbed by the target gases increases the temperature of the gas volume 4 slightly. If this volume almost is closed, the temperature rise will induce an increase of the gas pressure. If the light source 1' is modulated, the absorption by the target gas modulates the pressure within the absorption volume 4, and this modulation can be picked up by a microphone 3. The sound picked up by the microphone 3 is directly proportionally to the target gas concentration. The intensity of the light is measured by a photodiode 6.

Both sensitivity and diffusion of the gas into the absorption volume are strongly increased by the so-called resonant photo acoustics. In this case, the modulation frequency and the length of the absorption volume are chosen such that the sound generated by the target gas absorption corresponds to an acoustic resonance of the volume 4. If the acoustic eigenmode is chosen appropriately, the absorption volume (i.e. the ends of the tube 5) can be left open.

A distinctive drawback of this measurement method is the limited modulation frequency of light bulbs, which is on the order of 100 Hz. At such a frequency, the device is subject to the pickup of environmental noise. Which strongly hampers its performance. The modulation via a chopper wheel allows higher frequencies, but the vibrations of the wheel will introduce a noise on exactly the modulation frequency.

The second drawback of the low frequency is that the absorption volume requires a length in excess of one meter for resonant absorption.

With near-infrared (NIR) photo acoustics (Fig.2), the thermal light bulb and the filter are replaced by a near-infrared laser 1 (often a laser diode), which detects the target gas at overtones of the fundamental absorption lines. The great advantage of the NIR laser diode is the possibility to apply an on-off modulation with frequencies up to the MHz range.

In contrary to the infrared photo acoustics described above, where the filter lets pass through a wavelength range on the order of 100 nm, the laser diode used for NIR photo acoustics has a wavelength width of typically 0.1 nm. This implies that the laser wavelength has to be exactly locked to a known wavelength in respect to the absorption spectrum of the target gas in order to maintain the calibration of the gas sensor.

This locking is important for target gases with separated and narrow lines, as well as for target gases which show no separate lines, but rather an extended spectrum as it is the case for higher hydrocarbons.

Thus, it is an object of the invention to provide a method and a sensor, which allow determining target gases with an extended spectrum.

This object is solved by a method and a sensor as claimed. Further advantageous embodiments are claimed in the respective subclaims. According to the invention the laser source is amplitude modulated such that the laser source changes it output wavelength across each cycle of the amplitude modulation between a minimum wavelength and a maximum wavelength. The photo acoustic near-infrared gas sensor comprises a modulation frequency generator, which provides a modulation signal for the laser source that changes the output wavelength of the laser source across each cycle of the amplitude modulation between a minimum wavelength and a maximum wavelength. This can be performed by several appropriate modulation signals and respective means. In general, the present invention uses the fact that the wavelength of the laser source is controlled by the laser source drive current, and by the temperature of the laser chip.

The laser source is set by its temperature to a wavelength, which corresponds to the absorption features of interest. According to one embodiment the current modulation of the laser is not done by an on-off modulation with a duty cycle of 50%, but with a multiplication between
- an on-off modulation with a duty cycle of, preferably, 50%
- a triangular saw-tooth modulation of equal frequency
such that during its "on" cycle, the laser source is ramped by its drive current from its wavelength at threshold current to its maximum wavelength corresponding to the maximum drive current. The present invention uses a modulation of 4 kHz, which rules out pick-up noise on one side, and reduces the absorption volume length to 4 cm. According to a further embodiment also a sinoidal modulation of the laser source drive current can be used. This solution provides minor exact results than in the embodiment mentioned above, however, dependent on the application of the gas sensor results might be sufficient. In another embodiment, alternatively, the laser source drive current is modulated with a duty cycle, preferably a duty cycle of 50%, and the temperature of the laser source is modulated at the same frequency as the laser source drive current. This method requires a fast change of the temperature and respective devices.

The result of this measurement scheme is that during each modulation cycle, the laser source scans its complete available wavelength range so that the absorption features of the target gas are levelled out to a mean value. This mean value is relatively insensitive to small variations of the laser's center wavelength; which are introduced by temperature variations.

Further features and advantages of the invention can be obtained from the following description of preferred embodiments in connection with the claims and the drawings. The single features can be realised alone or in combination in embodiments of the invention. The figures show:
- Fig. 1: a principle depiction of an infrared photo acoustic gas sensor;
- Fig. 2: a principle depiction of a near-infrared photo acoustic gas sensor
- Fig. 3: the laser line scanned during each modulation cycle across the absorption features of the gas;
- Fig 4: the comparison of the laser wavelength width to the absorption features of the gas;
- Fig. 5: a block diagram of a first embodiment of a gas sensor;
- Fig. 6: a block diagram of another embodiment of a gas sensor, and
- Fig. 7: a block diagram of a further embodiment of a gas sensor.

Figure 1 and Figure 2 show the well-known principles of the different photo acoustic sensors as discussed above.

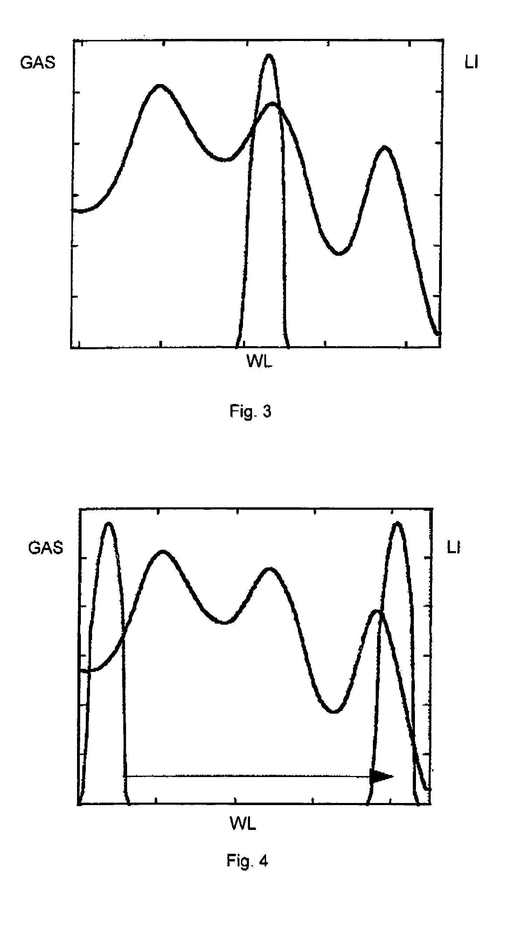

Figure 3 and Figure 4 show the gas absorption strength GAS and the laser intensity Ll in dependence of the wavelength WL. The figures show the variations of the gas absorption. The laser intensity peak locked to a defined wavelength as shown in Figure 3 only detects the gas absorption at this defined wavelength. In view of the differences of the absorption strength of the broadband spectra, a 0.1 nm shift to one side of the laser wavelength may lead to differences in the absorption strength of about 30-50%. Thus the results also can vary in a wide range. By sweeping the laser peak across the wavelength as disclosed in Figure 4, the absorption features of the target gas are levelled out to a mean value.

Although in the following the invention is described in connection with a laser diode as laser source, the invention is not limited to this device and other appropriate laser sources having similar features might be used for obtaining similar results. Further, as known in the art, more than one laser source 1 with appropriate detection means may be used.

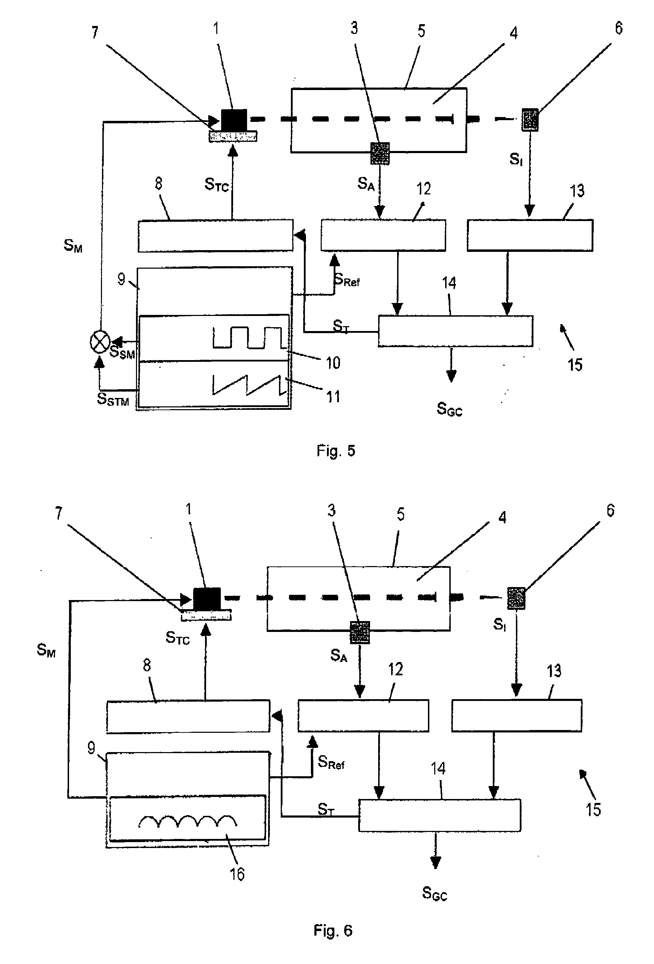

Figure 5 shows the principle of the gas sensor with processing means 15 for the processing of the signals. A laser source 1, preferably a diode laser, which is in connection with temperature unit 7 acting as heater or cooler, emits light through a chamber 5 providing an absorption volume 4 for a target gas to be detected. A microphone 3 is arranged near the absorption volume 4. A photo diode 6 serves as photo detector and receives the light from the laser source 2. The laser source 1 is set by its temperature, via the temperature unit 7, to a wavelength, which corresponds to the absorption features of interest. A modulation frequency generator 9 comprises a square modulation means 10 providing a square modulation signal S_{SM} and a saw tooth modulation means 11 providing a saw tooth modulation signal S_{STM}. The drive current of the laser source 2 is then modulated with a modulation signal S_{M}, which is the multiplication of the signals S_{SM} and S_{STM}. The square modulation means 10 provides an on-off modulation of the laser source 1 with a duty cycle of 50% which is ramped, due to the saw tooth modulation 11, by its drive current from its wavelength at threshold current to its maximum wavelength corresponding to the maximum drive current.

The microphone 3 provides a signal S_{A}, which is proportional to the absorption of the gas in the absorption volume 4 and the photo diode 6 provides a signal S_{I}, which is proportional to the light intensity of the laser source 1. The signal S_{A} provided by the microphone 3 is fed to a lock-in-amplifier 12 for multiplying this signal with a reference signal S_{Ref} received from the modulation frequency generator 9 and finally integrating of the resulting signal. The signal from the photodiode 6 is fed to an amplifier 13. The signals from the lock-in-amplifier 12 and from the amplifier 13 are fed to a control unit 14. The control unit 14 the absorption signal S_{A} after having processed by the lock-in-amplifier 12 is normalised by dividing through the intensity signal S_{I} from the photodiode 6 after having amplified by amplifier 14. The resulting signal S_{GC} is the required signal for the concentration of the gas in the chamber 5. The control unit 14 further provides respective signals S_{T} to the temperature control 8 to keep the laser source 1 on its temperature to a wavelength, which corresponds to the absorption features of interest.

Figure 6 shows another embodiment in which the modulation frequency generator 9 only comprises a sine wave modulation 16 providing the laser source drive current modulation signal S_{M}. The sine wave modulation is a rectified sine wave modulation, which is obtained either by reversed negative parts of the sine wave or by deleting of the negative parts, e.g. by a laser diode.

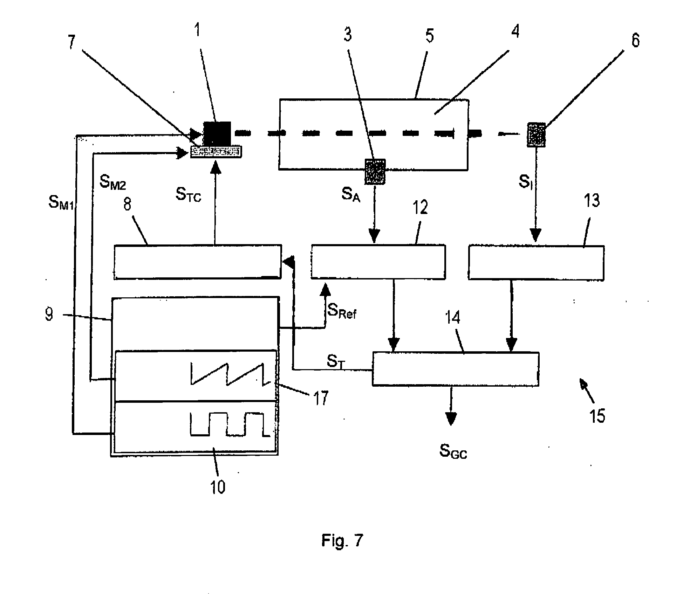

A further embodiment is depicted in Figure 7. There the modulation frequency generator 9 comprises the square modulation means 10 and a temperature modulation means 17. The square modulation means 10 provides a first modulation signal S_{M1} for modulating the laser source drive current and the temperature modulation means 17 provides a second modulation signal S_{M2} for modulating the temperature of the laser source 1 via the temperature unit 7.

## Claims

1. Gas detection method by using a photo acoustic near-infrared gas sensor using a near-infrared laser source (1) **characterised by** an amplitude modulation of the laser source (1) during which the laser source (1) changes it output wavelength across each cycle of the amplitude modulation between a minimum wavelength and a maximum wavelength.

2. A gas detection method according to claim 1, **characterised by** a modulation of the laser source drive current which is composed by the multiplication of an on-off modulation of duty cycle, preferably 50% duty cycle, and a saw-tooth modulation of the same frequency.

3. A gas detection method according to claim 1, **characterised by** a sinoidal modulation of the laser source drive current.

4. A gas detection method according to claim 1, **characterised by** an on-off modulation with a duty cycle, preferably a duty cycle of 50%, of the laser source drive current, and a modulation of the temperature of the laser source at the same frequency as the laser source drive current modulation.

5. A gas detection method according to one of the preceding claims,
**characterised in that** the laser source (1) is set by its temperature to a wavelength, which corresponds to the absorption features of interest.

6. A photo acoustic near-infrared gas sensor with
at least one amplitude modulated laser source (1);
a gas chamber (5) for receiving the gas to be detected;
a microphone (3) attached to the gas chamber (9);
a photo detector (6) for detecting the laser light intensity of the laser source (1);
processing means (15) comprising a modulation frequency generator (9) for providing a modulation signal (S_{M}) for the at least one laser source (1) and a control means (8, 12, 13, 14) for determining the gas concentration;
**characterised in, that**
said modulation frequency generator (9) provides a modulation signal (S_{M}) for the laser source (1) that changes the output wavelength of the laser source (1) across each cycle of the amplitude modulation between a minimum wavelength and a maximum wavelength.

7. A photo acoustic gas sensor according to claim 6, **characterised in that** said modulation frequency generator (9) comprises a square modulation means (10) and a saw tooth modulation means (11) for providing a modulation signal (S_{M}) for the laser source which is composed by the multiplication of an on-off modulation signal (S_{SM}) of a duty cycle, preferably 50% duty cycle, and a saw-tooth modulation signal (S_{STM}) of the same frequency.

8. A photo acoustic gas sensor according to claim 6, **characterised in that** said modulation frequency generator (9) comprises a means (16) for providing a sinoidal modulation signal (S_{M}) for the laser source.

9. A photo acoustic gas sensor according to claim 6, **characterised in that** said modulation frequency generator (9) comprises a means (11) for providing an on-off modulation signal (S_{M1}) with a duty cycle, preferably a duty cycle of 50%, of the laser source, and a means (17) for providing a temperature modulation signal (S_{M2}) for the temperature of the laser source (1) at the same frequency as the laser source modulation signal (S_{M1}).
